# EUROPEAN PATENT APPLICATION

(11) **EP 4 822 565 A1**
(43) Date of publication of application: **14.10.2026**
(21) Application number: 25876067.7
(22) Date of filing: 26.02.2025
(51) Int. Cl.: G06F 18/22

(54) **DIAGNOSTIC REPORT ANALYSIS METHOD AND SYSTEM, AND TERMINAL DEVICE AND STORAGE MEDIUM**

(30) Priority: 31.12.2024 CN 202411983944
(71) Applicant: Thinkcar Tech Co., Ltd., Shenzhen, Guangdong 518100 (CN)
(72) Inventor: TAN, Bin, Guangdong 518100 (CN); ZHANG, Wei, Guangdong 518100 (CN); YAO, Di, Guangdong 518100 (CN)
(74) Representative: Vogelbruch, Keang
(86) International application number: PCT/CN2025/079333
(87) International publication number: WO 2026/143830

(57) **Abstract**

The present invention discloses a diagnostic report analysis method, a diagnostic report analysis system, a terminal device, and a storage medium. The method includes: vectorizing fault information of a target vehicle received by the automobile diagnostic device to obtain target vector data; preprocessing acquired raw data of the vehicle to obtain raw vector data; calculating a similarity between the target vector data and the raw vector data to acquire matching data within a preset similarity range; and performing diagnostic analysis on the target vector data and the matching data by using a first pre-constructed model to obtain a diagnostic analysis result of the target vehicle. The raw vector data is obtained by preprocessing raw data, a similarity between target vector data and the raw vector data is calculated, selected matching data is then input into a first pre-constructed model for diagnostic analysis, and diagnostic analysis results are obtained.

## Description

### CROSS-REFERENCE TO RELATED APPLICATIONS

The present invention claims priority to Chinese Patent Application No. 2024119839445, filed with the China National Intellectual Property Administration on December 31, 2024, and entitled "DIAGNOSTIC REPORT ANALYSIS METHOD AND SYSTEM, TERMINAL DEVICE, AND STORAGE MEDIUM", which is incorporated herein by reference in its entirety.

### TECHNICAL FIELD

The present invention relates to the field of vehicle diagnosis, and in particular, to a diagnostic report analysis method, a diagnostic report analysis system, a terminal device, and a storage medium.

### BACKGROUND

At present, in the automobile repair field, an automobile diagnostic report is a key basis for determining a vehicle fault and a maintenance solution. A fault code is an important basis for determining a vehicle fault.

However, existing automobile diagnostic report parsing approaches mainly rely on experience and professional knowledge of technical personnel, and a manual interpretation process is cumbersome and time-consuming and is prone to misjudgment. For example, a large amount of time may also be required for research and analysis when newly emerging or rare fault codes are encountered. Meanwhile, with the increasing complexity of automobile technology, information in an automobile diagnostic report becomes more complex, and higher requirements are imposed on interpretation accuracy and efficiency.

Therefore, existing technologies still require improvement and enhancement.

### SUMMARY

The present invention provides a diagnostic report analysis method, a diagnostic report analysis system, a terminal device, and a storage medium, which aim to solve problems of low identification efficiency and poor accuracy in the interpretation of an automobile diagnostic report in the prior art.

According to a first aspect, an embodiment of the present invention provides a diagnostic report analysis method, applied to an automobile diagnostic device, which includes:
vectorizing fault information of a target vehicle received by the automobile diagnostic device to obtain target vector data;
preprocessing acquired raw data of the vehicle to obtain raw vector data;
calculating a similarity between the target vector data and the raw vector data to acquire matching data within a preset similarity range; and
performing diagnostic analysis on the target vector data and the matching data by using a first pre-constructed model to obtain a diagnostic analysis result of the target vehicle.

In some embodiments, the diagnostic report analysis method further includes:
verifying the diagnostic analysis result, and adjusting parameters of the first pre-constructed model based on an obtained verification result.

In some embodiments, calculating the similarity between the target vector data and the raw vector data to acquire the matching data within the preset similarity range includes:
performing similarity matching between the target vector data and the raw vector data by a vector similarity algorithm, and filtering data with a similarity within the preset similarity range to obtain the matching data.

In some embodiments, before using the first pre-constructed model, the diagnostic report analysis method includes:
presetting parameters of the first pre-constructed model to obtain a prompt;
where the prompt is used to perform diagnostic analysis on the target vector data and the matching data.

In some embodiments, performing diagnostic analysis on the target vector data and the matching data by using the first pre-constructed model to obtain the diagnostic analysis result of the target vehicle includes:
merging the target vector data and the matching data to obtain a merged textual language; and
performing parsing and identification on fault codes, fault descriptions, and target components in the merged textual language by using the prompt set in the first pre-constructed model to obtain fault components of the target vehicle, fault information, fault causes, and maintenance recommendations thereof.

In some embodiments, preprocessing the acquired raw data of the vehicle includes:
acquiring vehicle maintenance records or fault record information input or pre-stored by a user to obtain the raw data;
cleaning, standardizing, and performing tokenization on the vehicle maintenance records; or
after cleaning the fault record information, vectorizing cleaned fault record information by using a second pre-constructed model.

In some embodiments, vectorizing the fault information of the target vehicle received by the automobile diagnostic device includes:
acquiring data information of an electronic control unit of the target vehicle detected by the automobile diagnostic device; and
vectorizing the data information of the electronic control unit by using a second pre-constructed model to obtain the target vector data,
wherein the data information includes data parameters and original fault code information, and the data parameters include a rotation speed, a temperature, a voltage, and a current of an engine of the target vehicle.

According to a second aspect, an embodiment of the present invention provides a diagnostic report analysis system, applied to an automobile diagnostic device, which includes:
a vectorization module, configured to vectorize fault information of a target vehicle received by the automobile diagnostic device to obtain target vector data;
a preprocessing module, configured to preprocess acquired raw data of the vehicle to obtain raw vector data;
a calculation module, configured to calculate a similarity between the target vector data and the raw vector data to acquire matching data within a preset similarity range; and
a parsing module, configured to perform diagnostic analysis on the target vector data and the matching data by using a first pre-constructed model to obtain a diagnostic analysis result of the target vehicle.

According to a third aspect, an embodiment of the present invention provides a terminal device, including a memory, a processor, a display, and a computer program stored on the memory and run on the processor, where the computer program, when executed by the processor, implements the steps of the diagnostic report analysis method as described above.

According to a fourth aspect, an embodiment of the present invention provides a computer-readable storage medium storing a computer program, where the computer program, when executed by a processor, implements the steps of the diagnostic report analysis method as described above.

Compared with the prior art, the present invention provides a diagnostic report analysis method, a diagnostic report analysis system, a terminal device, and a storage medium, wherein the method vectorizes fault information to obtain target vector data, calculates a similarity between the target vector data and raw vector data, and filters matching data within a preset similarity range, and then inputs the matching data into a first pre-constructed model for diagnostic analysis to obtain diagnostic analysis results, including possible fault causes, involved components, and maintenance recommendations, so that an automobile diagnostic report is analyzed rapidly and efficiently, fault codes are interpreted, and reasonable maintenance recommendations are provided, thereby greatly improving maintenance quality.

### BRIEF DESCRIPTION OF THE DRAWINGS

To more clearly illustrate the technical solutions of the embodiments of the present invention, the drawings required in the embodiments of the present invention will be briefly described below. It should be understood that the following drawings only illustrate some embodiments of the present invention and therefore should not be considered as limitations of the scope. For those of ordinary skill in the art, other related drawings can be obtained according to these drawings without creative efforts.
FIG. 1 is a schematic flowchart of a diagnostic report analysis method according to the present invention;
FIG. 2 is a schematic flowchart of a process for acquiring target vector data in a diagnostic report analysis method according to the present invention;
FIG. 3 is a schematic flowchart of a preprocessing process in a diagnostic report analysis method according to the present invention;
FIG. 4 is a schematic flowchart of a process for acquiring diagnostic analysis results in a diagnostic report analysis method according to the present invention; and
FIG. 5 is a schematic diagram of a structure of a diagnostic report analysis system according to the present invention.

### DETAILED DESCRIPTION OF THE EMBODIMENTS

The following clearly and completely describes the technical solutions in the embodiments of the present invention with reference to the drawings in the embodiments of the present invention. Apparently, the described embodiments are only a part rather than all of the embodiments of the present invention.

The assemblies of embodiments of the present invention, as generally described and illustrated in the figures herein, can be arranged and designed in a wide variety of different configurations. Therefore, the following detailed descriptions of the embodiments of the present invention provided in the drawings are not intended to limit the scope of the claimed disclosure, but merely to represent selected embodiments of the present invention. All other embodiments obtained by those skilled in the art based on the embodiments of the present invention without creative efforts shall fall within the protection scope of the present invention.

In the following description, the terms "include", "comprise", "have", and variants thereof, as used in various embodiments of the present invention, are intended only to indicate the presence of specific features, numbers, steps, operations, elements, components, or combinations thereof, and are not to be understood as excluding the existence of one or more other features, numbers, steps, operations, elements, components, or combinations thereof, or as precluding the possibility of adding one or more features, numbers, steps, operations, elements, components, or combinations thereof. In addition, the terms "first", "second", and "third" are used only for distinguishing descriptions and should not be construed as indicating or implying relative importance.

Unless otherwise specifically defined, all terms used herein (including technical and scientific terms) have the same meanings as commonly understood by those of ordinary skill in the art to which various embodiments of the present invention pertain. The terms (such as those defined in general dictionaries) are to be interpreted as having the same meanings as in the contextual use in the relevant technical field and are not to be interpreted as having idealized or overly formal meanings, unless clearly defined in various embodiments of the present invention.

The present invention provides a diagnostic report analysis method, a diagnostic report analysis system, a terminal device, and a storage medium. The diagnostic report analysis method vectorizes fault information to obtain target vector data, calculates a similarity between the target vector data and raw vector data, and filters matching data within a preset similarity range, and then inputs the matching data into a first pre-constructed model for diagnostic analysis to obtain diagnostic analysis results, including possible fault causes, involved components, and maintenance recommendations, so that an automobile diagnostic report is analyzed rapidly and efficiently, fault codes are interpreted, and reasonable maintenance recommendations are provided, thereby greatly improving maintenance quality.

The following describes a design scheme of the diagnostic report analysis method by means of some specific embodiments.

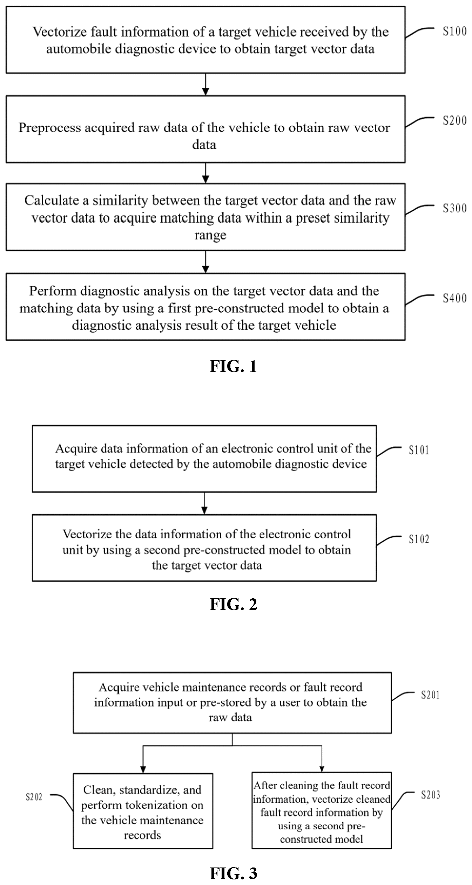

Referring to FIG. 1, an embodiment of the present invention provides a diagnostic report analysis method, applied to an automobile diagnostic device, which may be summarized as analysis of an automobile diagnostic report and analysis or interpretation of automobile fault codes, including the following steps S100-S400:
S100: Vectorizing fault information of a target vehicle received by the automobile diagnostic device to obtain target vector data.

Vectorization is a data processing manner that converts data from a scalar form into a vector form.

Exemplarily, in a first embodiment of the present invention (analysis of an automobile diagnostic report), the vectorized target vector data is obtained by acquiring automobile diagnostic report information (i.e., the fault information) and vectorizing the fault information by using vectorized data.

The diagnostic report includes data information of an electronic control unit of a target vehicle (the target vehicle is a vehicle currently being detected), such as data parameters including a rotation speed, a temperature, a voltage, and a current of an engine, and further includes fault code information. The electronic control unit of the automobile refers to a control apparatus composed of integrated circuits and configured to implement a series of functions including data analysis, data processing, and data transmission.

In a second embodiment (analysis or interpretation of automobile fault codes), an intelligent diagnostic device and an on-board diagnostics (OBD) transmitter commercially available from a company are used, and after connection to a target vehicle, the device scans target vehicle data to acquire fault code information (i.e., fault information) returned by a system. Subsequently, the fault code information is vectorized to obtain target vector data. Meanwhile, the target vector data is stored in a vector database to update the database.

Exemplarily, target vector data is obtained as a similarity comparison standard by vectorizing a large amount of fault information of a target vehicle, thereby improving the accuracy of report analysis.

For example, in an implementation, referring to FIG. 2, vectorizing the fault information of the target vehicle received by the automobile diagnostic device includes:
S101: acquiring data information of an electronic control unit of the target vehicle detected by the automobile diagnostic device; and
S102: vectorizing the data information of the electronic control unit by using a second pre-constructed model to obtain the target vector data.

The data information includes data parameters and original fault code information, and the data parameters include a rotation speed, a temperature, a voltage, and a current of an engine of the target vehicle. The second pre-constructed model is a vectorization model; the vectorization model includes one-hot encoding, a bag-of-words model, a term frequency-inverse document frequency model, an N-gram model, a word-to-vector model, and a document-to-vector model, where one-hot encoding is a method for converting categorical variables into binary vectors; the bag-of-words model is a method that ignores word order and grammatical factors and treats text as a simple collection of vocabulary; the term frequency-inverse document frequency model is a method that combines term frequency and inverse document frequency to measure importance of a word in a document; the N-gram model is a method for predicting a next most likely occurring word based on given text information; and the word-to-vector model is a method for converting words into dense vectors.

Exemplarily, in the first embodiment, data information of an electronic control unit of a target vehicle detected by an automobile diagnostic device is acquired by using an interface of an automobile diagnostic device or system, where the data information includes data parameters such as a rotation speed, a temperature, a voltage, and a current of an engine, and further includes fault code information.

Subsequently, target vector data is obtained by vectorizing the data information of the electronic control unit through a vectorization model.

S200: Preprocessing acquired raw data of the vehicle to obtain raw vector data.

The raw data includes vehicle maintenance records, including basic vehicle information, fault information (such as engine faults, abnormal display readings, brake system or wiper malfunction or insensitivity, automatic ventilation system faults, and windows failing to close), data stream information when a fault occurs, maintenance cases (including causes, maintenance procedures, and follow-ups), and the like.

Exemplarily, in the first embodiment, the raw data (including basic vehicle information, fault information, data stream information when a fault occurs, and maintenance cases) such as vehicle maintenance records of a large number of vehicles (it should be noted that the vehicles refer to a large quantity of different or same types of vehicles) is first acquired. Subsequently, the raw data is preprocessed by cleaning, standardization, and tokenization to obtain preprocessed data, and the preprocessed data is then stored in a vector knowledge base (i.e., a database) to update the vector knowledge base.

In the second embodiment, after the raw data such as a large amount of fault code data is acquired, the raw data is preprocessed by cleaning and vectorization to obtain preprocessed data, and the preprocessed data is then stored in a vector database (i.e., a database) to update the vector database.

It can be understood that the quality and standardization of the data are ensured by preprocessing the raw data in the present invention to optimize the data and improve the accuracy of identification results.

For example, in an implementation, referring to FIG. 3, preprocessing the acquired raw data of the vehicle includes:
S201: acquiring vehicle maintenance records or fault record information input or pre-stored by a user to obtain the raw data;
S202: cleaning, standardizing, and performing tokenization on the vehicle maintenance records; or
S203: after cleaning the fault record information, vectorizing cleaned fault record information by using a second pre-constructed model.

The second pre-constructed model is a vectorization model, used in the present invention to perform vectorization on the fault information or the raw data, thereby standardizing formats and improving data processing efficiency.

Exemplarily, in the first embodiment, the raw data (including basic vehicle information, fault information, data stream information when a fault occurs, and maintenance cases), such as a large amount of vehicle maintenance records uploaded by enterprise users or staff, or accumulated in a maintenance record management system of a vehicle manufacturer, is acquired.

The vehicle maintenance records are cleaned, standardized, and tokenized:
The raw data is organized, including cleaning formats, removing redundant symbols, standardizing file formats, and standardizing layout formats, to output reserved data that can be used for model pre-training, model fine-tuning, and supplementary maintenance materials. The tokenization refers to vectorized data for use in the vector knowledge base and training data, where during processing, a target document is segmented into a large number of text blocks, and the text blocks are then vectorized to generate multidimensional floating-point data, thereby enabling accumulation of the vector knowledge base.

In the second embodiment, after the raw data such as fault record information of a vehicle input or pre-stored by a user is acquired, the fault record information is cleaned and vectorized:
The fault record information is cleaned and processed to make the data more accurate, consistent, and complete. This process includes identifying and correcting or removing erroneous, duplicate, incomplete, or irrelevant data.

Identifying erroneous data refers to locating and detecting errors in the data, such as input mistakes or format inconsistencies. Processing missing data refers to supplementing or removing missing data records to ensure consistency and completeness of the data. Removing duplicate data refers to identifying and deleting duplicate data records to avoid redundant calculations and analyses. Standardizing data formats refers to unifying formats of the data, such as date formats or units, to make the data more consistent. Correcting erroneous data refers to modifying or rectifying incorrect data values to ensure the accuracy of the data.

Subsequently, since the vectorization model cannot directly process unstructured data such as text, images, or audio and video, vectorization is required. Therefore, the cleaned fault record information is vectorized by using the vectorization model (second pre-constructed model) to obtain target vector data, which constitutes an array of multidimensional floating-point numbers, for example, [0.3333, 0.1224, 0.3222...], with each dimension represented by a numerical value indicating a corresponding measure.

S300: Calculating a similarity between the target vector data and the raw vector data to acquire matching data within a preset similarity range.

Exemplarily, after the raw vector data is obtained, the target vector data is compared with the raw vector data for similarity to obtain matching data, and matching data within a preset similarity range (for example, the top n ranked similarities) is acquired.

Further, in another embodiment of the present invention, the raw vector data can be standard data defined by a user, where the standard data is obtained by using a driving habit-based fault identification standard or by analyzing and understanding automobile fault codes. The standard data is then compared with the target vector data for similarity. Moreover, the target vector data can be compared separately with the standard data and the raw vector data for similarity, and the data with higher similarity is reserved as comparison data for the raw vector data.

It can be understood that, in the present invention, the similarity between the target vector data and the raw vector data is calculated, and the data with a similarity within the preset similarity range is filtered as input data for model diagnostic analysis, so that the accuracy of the diagnostic results is improved.

For example, in an implementation, in the step S300, calculating the similarity between the target vector data and the raw vector data to acquire the matching data within the preset similarity range includes:
performing similarity matching between the target vector data and the raw vector data by a vector similarity algorithm, and filtering data with a similarity within the preset similarity range to obtain the matching data.

Exemplarily, the detailed process for obtaining the matching data is as follows:
Since the correct data in the database is extensive, a large number of similar keyword contents exist. Therefore, vector retrieval techniques (such as the minimum cosine distance calculation method) are first used to retrieve keywords that are the same as the target vector data.

Subsequently, similarity between the target vector data and the raw vector data is calculated by using a vector similarity algorithm. The keywords are extracted from the target vector data, similar keywords are retrieved from the database, and similarity is calculated between the extracted keywords and the retrieved keywords by using the vector similarity algorithm.

The vector similarity algorithm includes a cosine similarity algorithm. For example, for two-dimensional data points A and B (keywords), each having values on the x and y axes, the distance between A and B can be obtained by using cosine similarity. Similarly, for two points A and B in data with thousands of dimensions, when the distance between A and B is the smallest compared with other points, the features of the two points are the most similar.

Moreover, the contents of the top n closest points (i.e., within a preset range, where n can be freely set) are selected and returned to obtain the matching data.

S400: Performing diagnostic analysis on the target vector data and the matching data by using a first pre-constructed model to obtain a diagnostic analysis result of the target vehicle.

The first pre-constructed model is a closed-source or open-source large language model, for example, ChatGPT (a large language model primarily used for generating natural language text), OpenAI models, and Llama (a series of large language models).

Exemplarily, after the matching data is obtained, the target vector data and the matching data are input into the closed-source or open-source large language model (first pre-constructed model), and the closed-source or open-source large language model performs diagnostic analysis on the target vector data and the matching data to obtain diagnostic analysis results of the target vehicle, including possible fault causes, involved components, maintenance recommendations, and the like.

It can be understood that, in the present invention, the preprocessed text is input into the large language model for intelligent parsing, where the large language model extracts key information and generates maintenance recommendations based on algorithms and the knowledge base, so that the analysis efficiency is improved, the direct information and suggestions regarding fault causes are provided, and the maintenance efficiency is enhanced.

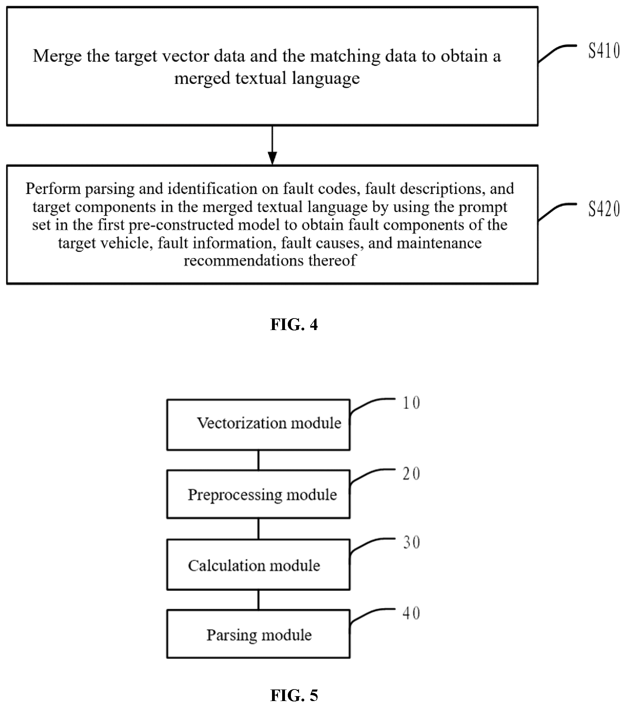

For example, in an implementation, referring to FIG. 4, in the step S400, performing diagnostic analysis on the target vector data and the matching data by using the first pre-constructed model to obtain the diagnostic analysis result of the target vehicle includes:
S410: merging the target vector data and the matching data to obtain a merged textual language; and
S420: performing parsing and identification on fault codes, fault descriptions, and target components in the merged textual language by using the prompt set in the first pre-constructed model to obtain fault components of the target vehicle, fault information, fault causes, and maintenance recommendations thereof.

The prompt is used to perform diagnostic analysis on the target vector data and the matching data, where the prompt is input through language instructions and generally includes content such as setting the model role, configuring skills, and establishing constraints.

Exemplarily, the process for obtaining diagnostic analysis results is as follows:
First, the target vector data and the matching data are merged to obtain merged textual language. In the second embodiment, the original fault code information in the data and the returned top n contents (i.e., the matching data) are merged into contextual textual language (merged textual language), namely, a normal language text.

Subsequently, the contextual textual language is input into the closed-source or open-source large language model. Thereafter, the closed-source or open-source large language model interprets the contextual textual language according to specified rules, such as formatting, extracting specific content, and output tone as defined by prompts, to obtain diagnostic analysis results including defined model output, fault code definitions, observed phenomena, circuit test results, component test results, maintenance guidelines, and reference images.

For example, when fault codes P0101, P0107, and P0110 appear, the corresponding explanations indicate a fault in an air flow meter circuit, a too low input voltage of an intake pressure sensor, and an intermittent fault in an intake temperature sensor circuit, respectively.

The following provides examples of fault codes and corresponding explanations:
P0101: a fault in an air flow meter circuit; P0102: a too low input voltage of an air flow meter circuit; P0103: a too high input voltage of an air flow meter circuit; P0104: an intermittent fault in an air flow meter circuit; P0105: a fault in an intake pressure sensor circuit; P0106: a fault in an intake pressure sensor circuit; P0107: a too low input voltage of an intake pressure sensor circuit; P0108: a too high input voltage of an intake pressure sensor circuit; P0109: a fault in an intake temperature sensor circuit or an intermittent fault in an intake pressure sensor circuit; and P0110: an intermittent fault in an intake temperature sensor circuit.

For example, in an implementation, before using the first pre-constructed model, the diagnostic report analysis method includes:
presetting parameters of the first pre-constructed model to obtain a prompt; where the prompt is used to perform diagnostic analysis on the target vector data and the matching data.

Exemplarily, the prompt is obtained by pre-setting parameters of the first pre-constructed model, namely by setting model roles, configuring skills, and establishing restrictions.

For example, in an implementation, after the diagnostic analysis results of a target vehicle are obtained, the results are output in a clear format, such as textual description or chart, to facilitate the comprehension and utilization of the user.

For example, in an implementation, the diagnostic report analysis method further includes:
S500: verifying the diagnostic analysis result, and adjusting parameters of the first pre-constructed model based on an obtained verification result.

Exemplarily, after the diagnostic analysis results are obtained, a technician validates and adjusts the results, that is, continuously optimizes parameters of the first pre-constructed model based on the accuracy of the obtained diagnostic analysis results, so as to continuously optimize the analysis model.

Referring to FIG. 5, an embodiment of the present invention provides a diagnostic report analysis system, applied to an automobile diagnostic device, which includes:
a vectorization module 10, configured to vectorize fault information of a target vehicle received by the automobile diagnostic device to obtain target vector data;
a preprocessing module 20, configured to preprocess acquired raw data of the vehicle to obtain raw vector data;
a calculation module 30, configured to calculate a similarity between the target vector data and the raw vector data to acquire matching data within a preset similarity range; and
a parsing module 40, configured to perform diagnostic analysis on the target vector data and the matching data by using a first pre-constructed model to obtain a diagnostic analysis result of the target vehicle.

Exemplarily, the diagnostic report analysis system is applied to the diagnostic report analysis method, and an implementation process of the diagnostic report analysis system is as follows:
First Embodiment: during the analysis of an automobile diagnostic report, an automobile diagnostic report (i.e., fault information), such as the data information of the electronic control unit, is first obtained by using an interface of an automobile diagnostic device or system, and the automobile diagnostic report is vectorized to obtain target vector data.

Then, a large amount of vehicle maintenance records (such as basic vehicle information, fault information, data stream information when a fault occurs, and maintenance cases) uploaded by enterprise users or staff, or stored in a vehicle manufacturer is acquired, and the vehicle maintenance records are preprocessed by cleaning, standardization, and tokenization, after which the preprocessed vehicle maintenance records are stored in a vector knowledge base (i.e., a database) to update the vector knowledge base.

Further, the similarity comparison is performed on the target vector data and data in the updated vector knowledge base to obtain matching data, and the matching data with the top n ranked similarities (within a preset similarity range) is extracted.

Finally, the target vector data and the matching data are input together into closed-source and open-source large language models, and the closed-source and open-source large language models perform diagnostic analysis to obtain diagnostic analysis results such as possible fault causes, involved components, and maintenance recommendations.

Second Embodiment: during the process of analyzing or interpreting automobile fault codes, similarly, fault code information of a target vehicle is first acquired through an interface of an automobile diagnostic device or system, and the fault code information is vectorized to obtain target vector data.

Then, fault code data such as fault record information of the target vehicle input by a user or pre-stored by a vehicle manufacturer is acquired, and after the fault record information is cleaned, the cleaned fault record information is vectorized by using a vectorization model (a second pre-constructed model) to complete preprocessing operations, and the preprocessed fault record information is then stored in a vector database (i.e., a database), so as to update the vector database.

Further, similarly, the similarity comparison is performed on the target vector data and data in the updated vector database to obtain matching data, and matching data with the top n ranked similarities is extracted. Thereafter, the target vector data and the matching data are input together into closed-source and open-source large language models, and the closed-source and open-source large language models perform diagnostic analysis to obtain diagnostic analysis results such as possible fault causes, involved components, and maintenance recommendations.

It can be understood that the diagnostic report analysis system belongs to an interactive intelligent diagnostic report analysis system based on artificial intelligence and large language model technologies. Diagnostic analysis is performed on target vector data and matching data through a first pre-constructed model, so as to rapidly and accurately analyze a diagnostic report of a target vehicle and interpret fault codes, so that the manual interpretation time is reduced, and maintenance personnel can quickly understand fault causes and maintenance directions, thereby effectively saving a large amount of time and improving maintenance efficiency.

Moreover, accurate analysis results and fault code interpretations facilitate technical personnel in formulating more reasonable maintenance solutions, thereby reducing misjudgment and maintenance errors and improving maintenance quality.

In addition, the application of large language model parsing technology to automobile diagnostic report analysis and fault code interpretation facilitates accumulation and inheritance of automobile maintenance technical knowledge, and reduces difficulty in fault code interpretation for technical personnel, thereby enabling novice technical personnel to better understand and process diagnostic reports.

The present invention further provides a terminal device, which is exemplarily an automobile diagnostic device. The terminal device includes a processor and a memory, where the memory stores a computer program, and the processor executes the computer program to cause the terminal device to perform the diagnostic report analysis method described above or functions of the modules in the diagnostic report analysis system described above.

The automobile diagnostic device records automobile data of all types for entry of raw data. When a vehicle is subjected to fault detection, an automobile diagnostic device automatically identifies vehicle information and searches for historical data corresponding to the vehicle, where the historical data is not limited to data of the same vehicle. The historical data refers to maintenance records stored during a previous detection or raw data of a vehicle of the same model and brand, where the vehicle of the same model and brand is not limited to the same vehicle.

Then, the automobile diagnostic device can invoke historical data stored in a database for comparative analysis. If no historical data is found during a current diagnostic process and raw data is stored in the database, raw vector data and target vector data are used for comparative analysis. If only historical data exists in the database and raw data does not exist, historical data and target vector data are used for comparative analysis. If neither historical data nor raw data exists, a database is newly established, and vehicle model data and fault data of the current vehicle are stored, so that the stored data is used for comparison when fault diagnosis of the vehicle model is required in a subsequent diagnostic process.

The processor can be an integrated circuit chip having signal processing capability. The processor can be a general-purpose processor, including at least one of a central processing unit (CPU), a graphics processing unit (GPU), a network processor (NP), a digital signal processor (DSP), an application-specific integrated circuit (ASIC), a field-programmable gate array (FPGA), other programmable logic devices, discrete gate or transistor logic devices, or discrete hardware components. The general-purpose processor can be a microprocessor, or the processor can be any conventional processor, and can implement or execute the methods, steps, and logic flowcharts disclosed in the embodiments of the present invention.

The memory can include, but is not limited to, a random access memory (RAM), a read-only memory (ROM), a programmable read-only memory (PROM), an erasable programmable read-only memory (EPROM), an electrically erasable programmable read-only memory (EEPROM), or the like. The memory is configured to store the computer program, and the processor, upon receiving execution instructions, correspondingly executes the computer program.

The present invention further provides a computer-readable storage medium configured to store the computer program used by the terminal device described above. For example, the computer-readable storage medium can include, but is not limited to, a USB flash drive, a portable hard drive, a read-only memory (ROM), a random access memory (RAM), a magnetic disk, an optical disk, or any other medium capable of storing program code.

In the embodiments provided by the present invention, it should be understood that the apparatuses and methods disclosed herein can also be implemented by other means. The apparatus embodiments described above are merely exemplary. For example, the flowcharts and structural diagrams in the drawings illustrate possible architectures, functions, and operations of the apparatuses, methods, and computer program products according to various embodiments of the present invention. In this regard, each block in the flowcharts or the block diagrams can represent a portion of a module, a program segment or codes, where the portion of the module, the program segment or the codes includes one or more executable instructions for implementing specified logical functions. It should also be noted that, in some alternative implementations, the functions shown in the blocks can occur in an order different from the order shown in the drawings. For example, two consecutive blocks can, in fact, be executed substantially in parallel, and the two blocks can sometimes be executed in a reverse order, depending upon the functions involved. It should also be noted that each block of the structural diagrams and/or the flowcharts and a combination of the blocks in the structural diagrams and/or the flowcharts can be implemented through a dedicated hardware-based system that executes a specified function or operation, or can be implemented through a combination of a dedicated hardware and a computer instruction.

In addition, the functional modules or units in the various embodiments of the present invention can be integrated together to form an independent part, or can exist separately as individual modules, or two or more modules can be integrated to form an independent part.

When the functions are implemented in a form of a software functional module and sold or used as an independent product, the functions can be stored in a computer-readable storage medium. Based on such an understanding, the technical solutions of the present invention essentially or parts contributing to the prior art or some of the technical solutions can be embodied in a form of a software product. The computer software product is stored in a storage medium, and includes several instructions for instructing a computer device (which can be a smartphone, a personal computer, a server, a network device, or the like) to perform all or some of the steps of the methods described in the embodiments of the present invention.

The foregoing descriptions are merely specific embodiments of the present invention, but are not intended to limit the protection scope of the present invention. Any variation or replacement readily figured out by those skilled in the art within the technical scope disclosed in the present invention shall fall within the protection scope of the present invention.

## Claims

1. A diagnostic report analysis method, applied to an automobile diagnostic device, **characterized by** comprising:
vectorizing fault information of a target vehicle received by the automobile diagnostic device to obtain target vector data;
preprocessing acquired raw data of the vehicle to obtain raw vector data;
calculating a similarity between the target vector data and the raw vector data to acquire matching data within a preset similarity range; and
performing diagnostic analysis on the target vector data and the matching data by using a first pre-constructed model to obtain a diagnostic analysis result of the target vehicle.

2. The diagnostic report analysis method according to claim 1, further comprising:
verifying the diagnostic analysis result, and adjusting parameters of the first pre-constructed model based on an obtained verification result.

3. The diagnostic report analysis method according to claim 1, wherein the calculating the similarity between the target vector data and the raw vector data to acquire the matching data within the preset similarity range comprises:
performing similarity matching between the target vector data and the raw vector data by a vector similarity algorithm, and filtering data with a similarity within the preset similarity range to obtain the matching data.

4. The diagnostic report analysis method according to claim 1, before using the first pre-constructed model, comprising:
presetting parameters of the first pre-constructed model to obtain a prompt,
wherein the prompt is used to perform diagnostic analysis on the target vector data and the matching data.

5. The diagnostic report analysis method according to claim 4, wherein the performing diagnostic analysis on the target vector data and the matching data by using the first pre-constructed model to obtain the diagnostic analysis result of the target vehicle comprises:
merging the target vector data and the matching data to obtain a merged textual language; and
performing parsing and identification on fault codes, fault descriptions, and target components in the merged textual language by using the prompt set in the first pre-constructed model to obtain fault components of the target vehicle, fault information, fault causes, and maintenance recommendations of the fault components.

6. The diagnostic report analysis method according to claim 1, wherein the preprocessing the acquired raw data of the vehicle comprises:
acquiring vehicle maintenance records or fault record information input or pre-stored by a user to obtain the raw data;
cleaning, standardizing, and performing tokenization on the vehicle maintenance records; or
after cleaning the fault record information, vectorizing cleaned fault record information by using a second pre-constructed model.

7. The diagnostic report analysis method according to claim 1, wherein the vectorizing the fault information of the target vehicle received by the automobile diagnostic device comprises:
acquiring data information of an electronic control unit of the target vehicle detected by the automobile diagnostic device; and
vectorizing the data information of the electronic control unit by using a second pre-constructed model to obtain the target vector data,
wherein the data information comprises data parameters and original fault code information, and the data parameters comprise a rotation speed, a temperature, a voltage, and a current of an engine of the target vehicle.

8. A diagnostic report analysis system, applied to an automobile diagnostic device, **characterized by** comprising:
a vectorization module, configured to vectorize fault information of a target vehicle received by the automobile diagnostic device to obtain target vector data;
a preprocessing module, configured to preprocess acquired raw data of the vehicle to obtain raw vector data;
a calculation module, configured to calculate a similarity between the target vector data and the raw vector data to acquire matching data within a preset similarity range; and
a parsing module, configured to perform diagnostic analysis on the target vector data and the matching data by using a first pre-constructed model to obtain a diagnostic analysis result of the target vehicle.

9. A terminal device, **characterized by** comprising a memory, a processor, a display, and a computer program stored on the memory and run on the processor, wherein the computer program, when executed by the processor, implements the steps of the diagnostic report analysis method according to any one of claims 1-7.

10. A computer-readable storage medium, storing a computer program, **characterized in that** the computer program, when executed by a processor, implements the steps of the diagnostic report analysis method according to any one of claims 1-7.
